# EUROPEAN PATENT APPLICATION

(11) **EP 3 391 747 A1**
(43) Date of publication of application: **24.10.2018**
(21) Application number: 18157762.8
(22) Date of filing: 21.02.2018
(51) Int. Cl.: A01N 43/653, A01P 3/00

(54) **USE OF PHENOXYPYRIDINYL-SUBSTITUTED (1H-1,2,4-TRIAZOL-1-YL)ALCOHOLS FOR ENHANCING CROP PERFORMANCE**

(71) Applicant: Bayer AG, 51373 Leverkusen (DE)
(72) Inventor: Dahmen , Peter, 41470 Neuss (DE)
(74) Representative: BIP Patents

(57) **Abstract**

The present invention relates to a method of increasing plant yield and/or increasing the chlorophyll content of a plant by applying a phenoxypyridinyl-substituted (1H-1,2,4-triazol-1-yl)alcohol of formula (I) 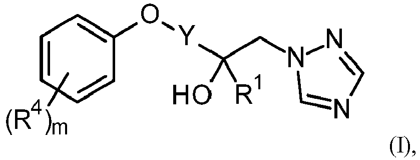 wherein R¹, R⁴, m and Y are defined as disclosed in the specification, to the plant or a part thereof via spray application.

## Description

The present invention relates to the use of defined phenoxypyridinyl-substituted (1H-1,2,4-triazol-1-yl)alcohols for increasing plant yield and/or increasing the chlorophyll content of a plant and to a method of increasing plant yield and/or increasing the chlorophyll content of a plant by spray application of a defined phenoxypyridinyl-substituted (1H-1,2,4-triazol-1-yl)alcohol to the plant or a part thereof.

Certain substituted (1H-1,2,4-triazol-1-yl)alcohols are known to be useful in the field of crop protection, in particular as fungicides. WO 2017/029179 A1 discloses such substituted (1H-1,2,4-triazol-1-yl)alcohols, including phenoxypyridinyl-substituted (1H-1,2,4-triazol-1-yl)alcohols, processes for preparing these compounds and methods for controlling harmful microorganisms, in particular phytopathogenic harmful fungi, in crop protection and in the protection of materials using said substituted (1H-1,2,4-triazol-1-yl)alcohols. Besides potent microbicidal, in particular fungicidal activity, WO 2017/029179 A1 mentions further beneficial properties of said compounds, for example efficacy as growth regulator, potent strengthening effects in plants, yield increase effects and various plant physiology effects.

The effects described in the prior art have to be considered as positive. However, in some cases they require improvement.

Surprisingly, it has now been found that defined phenoxypyridinyl-substituted (1H-1,2,4-triazol-1-yl)alcohols provide a distinct increase in plant yield and/or chlorophyll content of a plant when applied to the plant or a part thereof, even under pathogen-free conditions.

Accordingly, subject of this invention is a method of increasing plant yield and/or increasing the chlorophyll content of a plant, comprising spray application of a compound of formula (I) 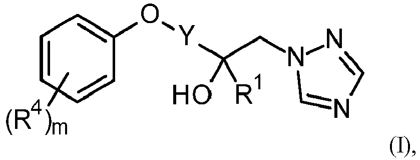 wherein
- R¹: represents hydrogen, C₁-C₆-alkyl, C₂-C₆-alkenyl, C₂-C₆-alkynyl, C₃-C₈-cycloalkyl, C₃-C₈-cycloalkyl-C₁-C₄-alkyl or C₆-C₁₄-aryl,
wherein the aliphatic moieties, excluding cycloalkyl moieties, of R¹ may carry 1, 2, 3 or up to the maximum possible number of identical or different groups R^{a} which independently of one another are selected from halogen, CN, nitro, phenyl, C₁-C₄-alkoxy and C₁-C₄-halogenalkoxy, wherein the phenyl may be substituted by 1, 2, 3, 4 or 5 substituents selected independently from
each other from halogen, CN, nitro, C₁-C₄-alkyl, C₁-C₄-alkoxy, C₁-C₄-halogenalkyl, C₁-C₄-halogenalkoxy,
and wherein the cycloalkyl and/or C₆-C₁₄-aryl moieties of R¹ may carry 1, 2, 3, 4, 5 or up to the maximum number of identical or different groups R^{b} which independently of one another are selected from halogen, CN, nitro, C₁-C₄-alkyl, C₁-C₄-alkoxy, C₁-C₄-halogenalkyl and C₁-C₄-halogenalkoxy;
- each R⁴: represents independently of one another halogen, CN, nitro, C₁-C₄-alkyl, C₁-C₄-halogenalkyl, C₁-C₄-alkoxy, C₁-C₄-halogenalkoxy, C₁-C₄-alkylcarbonyl, hydroxy-substituted C₁-C₄-alkyl, pentafluoro-λ⁶-sulfanyl, C₃-C₆-cycloalkyl, C₃-C₆-halogencycloalkyl, C₁-C₄-alkyl-C₃-C₆-cycloalkyl, C₂-C₆-alkenyl, C₂-C₆-halogenalkenyl, C₂-C₆-alkynyl, C₂-C₆-halogenalkynyl, C₁-C₄-alkylsulfanyl, C₁-C₄-halogenalkylsulfanyl, C₁-C₆-alkylsulfonyl, C₆-C₁₀-arylsulfonyl, C₁-C₆-alkyl-SO₂NH-, C₆-C₁₀-aryl-SO₂NH-, formyl, 5-, 6- or 7-membered saturated heterocycloalkyl containing up to 4 heteroatoms selected from N, O and S, or -C(R^{4a})=N-OR^{4b}, wherein R^{4a} and R^{4b} represent independently from each other hydrogen, C₁-C₆-alkyl or phenyl;
- m: is an integer and is 0, 1, 2, 3, 4 or 5;
- Y: represents 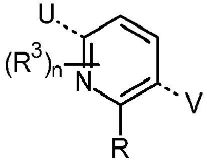
wherein Y is connected to the O via the bonds identified with "U" and Y is connected to the CR¹ moiety via the bonds identified with "V" and
wherein
- R: represents hydrogen, C₁-C₂-halogenalkyl, C₁-C₂-halogenalkoxy, C₁-C₂-alkylcarbonyl or halogen;
- each R³: represents independently from each other halogen, CN, nitro, C₁-C₄-alkyl, C₁-C₄-halogenalkyl, C₁-C₄-alkoxy or C₁-C₄-halogenalkoxy; and
- n: is an integer and is 0 or 1;
to the plant or a part thereof.

Increasing plant yield is defined referring to total biomass per hectare, yield per hectare, in particular grain yield per hectare, kernel/fruit weight, seed size and/or hectolitre weight as well as to increased product quality, to comprise improved processability relating to size distribution (kernel, fruit, etc.), homogenous riping, grain moisture, better milling, better vinification, better brewing, increased juice yield, harvestability, digestibility, sedimentation value, falling number, pod stability, storage stability, improved fiber length/strength/uniformity, increase of milk and/or meet quality of silage fed animals, adaption to cooking and frying.

Preferably, according to this invention increasing plant yield refers to an increase in total biomass per hectare, canopy coverage and/or grain yield per hectare.

The chlorophyll content of a plant and, hence, an increase thereof can be determined by various methods well established in the art, e.g. by the pigment extraction method of Ziegler and Ehle. According to this invention the chlorophyll content is measured by means of the commercially available hand-held chlorophyll meter SPAD-502 (Konica Minolta).

It has been further found that phenoxypyridinyl-substituted (1H-1,2,4-triazol-1-yl)alcohols of formula (I) are very effective in controlling strains of *Septoria tritici* that are known to be difficult to control.

Formula (I) provides a general definition of the triazole derivatives used in the method according to the invention. Preferred radical definitions for the formulae shown above and below are given below.
- R¹: preferably represents hydrogen, C₁-C₄-alkyl, C₂-C₆-alkenyl, C₂-C₆-alkynyl, cyclopropyl or C₆-C₁₀-aryl,
wherein the aliphatic moieties, excluding the cycloalkyl moieties, of R¹ may carry 1, 2, 3 or up to the maximum possible number of identical or different groups R^{a} which independently of one another are selected from halogen, CN, nitro, phenyl, C₁-C₄-alkoxy and C₁-C₄-halogenalkoxy, wherein the phenyl may be substituted by 1, 2, 3, 4 or 5 substituents selected independently of one another from halogen, CN, nitro, C₁-C₄-alkyl, C₁-C₄-alkoxy, C₁-C₄-halogenalkyl, C₁-C₄-halogenalkoxy,
and wherein the cycloalkyl and/or C₆-C₁₀-aryl moieties of R¹ may carry 1, 2, 3, 4, 5 or up to the maximum number of identical or different groups R^{b} which independently of one another are selected from halogen, CN, nitro, C₁-C₄-alkyl, C₁-C₄-alkoxy, C₁-C₄-halogenalkyl and C₁-C₄-halogenalkoxy.
- R¹: more preferably represents hydrogen, C₁-C₄-alkyl, C₂-C₆-alkenyl, C₂-C₆-alkynyl, cyclopropyl or phenyl,
wherein the aliphatic moieties, excluding the cycloalkyl moieties, of R¹ may carry 1, 2, 3 or up to the maximum possible number of identical or different groups R^{a} which independently of one another are selected from halogen, CN, nitro, phenyl, C₁-C₄-alkoxy and C₁-C₄-halogenalkoxy, wherein the phenyl may be substituted by 1, 2, 3, 4 or 5 substituents selected independently of one another from halogen, CN, nitro, C₁-C₄-alkyl, C₁-C₄-alkoxy, C₁-C₄-halogenalkyl, C₁-C₄-halogenalkoxy,
and wherein the cycloalkyl and/or phenyl moieties of R¹ may carry 1, 2, 3, 4, 5 or up to the maximum number of identical or different groups R^{b} which independently of one another are selected from halogen, CN, nitro, C₁-C₄-alkyl, C₁-C₄-alkoxy, C₁-C₄-halogenalkyl and C₁-C₄-halogenalkoxy.
- R¹: more preferably represents hydrogen, methyl, ethyl, propyl, isopropyl, butyl, cyclopropyl, allyl, CH₂C≡C-CH₃ or CH₂C≡CH,
wherein the aliphatic groups R¹ may carry 1, 2, 3 or up to the maximum possible number of identical or different groups R^{a} which independently of one another are selected from halogen, CN, nitro, phenyl, C₁-C₄-alkoxy and C₁-C₄-halogenalkoxy, wherein the phenyl may be substituted by 1, 2, 3, 4 or 5 substituents selected independently of one another from halogen, CN, nitro, C₁-C₄-alkyl, C₁-C₄-alkoxy, C₁-C₄-halogenalkyl, C₁-C₄-halogenalkoxy.
- R¹: more preferably represents hydrogen or non-substituted methyl, ethyl, propyl, isopropyl, butyl, cyclopropyl, CF₃, benzyl, allyl, CH₂C≡C-CH₃ or CH₂C≡CH.
- R¹: more preferably represents hydrogen, methyl or ethyl.
- R¹: more preferably represents hydrogen or methyl.
- R¹: most preferably represents methyl.
- Each R⁴: preferably represents independently from each other methyl, ethyl, n-propyl, iso-propyl, CF₃, OCF₃, Br, Cl, pentafluoro-λ⁶-sulfanyl, cyclopropyl, 1-halogencyclopropyl, 1-C₁-C₄-alkylcyclopropyl, C₂-C₆-alkenyl, C₂-C₆-halogenalkenyl, C₂-C₆-alkynyl, C₂-C₆-halogenalkynyl, C₁-C₄-alkylsulfanyl, C₁-C₄-halogenalkylsulfanyl, C₁-C₄-alkylsulfonyl, phenylsulfonyl, C₁-C₄-alkyl-SO₂NH-, phenyl-SO₂NH-, formyl, aziridinyl, pyrrolidinyl, dihydropyridyl, piperidinyl, piperazinyl, morpholinyl, thiomorpholinyl, tetrahydrofuranyl, tetrahydrothiofuranyl, tetrahydropyranyl, pyranyl, isoxazolidinyl, isoxazolinyl, pyrazolinyl, dihydropyrrolyl, tetrahydropyridinyl, dioxolanyl, dioxanyl, oxathiolanyl, oxathianyl, dithiolanyl, dithianyl, or -C(R^{4a})=N-OR^{4b}, wherein R^{4a} and R^{4b} represent independently from each other hydrogen, C₁-C₆-alkyl or phenyl.
- Each R⁴: more preferably represents independently from each other CF₃, OCF₃, Br, Cl, pentafluoro-λ⁶-sulfanyl, cyclopropyl, 1-fluorocyclopropyl, 1-chlorocyclopropyl, 1-methylcyclopropyl, vinyl, allyl, ethynyl, prop-2-ynyl, SCH₃, SCH₂CH₃, SCH₂F, SCHF₂, SCF₃, methylsulfonyl, phenylsulfonyl, methyl-SO₂NH-, phenyl-SO₂NH-, formyl, dioxolanyl, dioxanyl, or -C(R^{4a})=N-OR^{4b},
wherein R^{4a} and R^{4b} represent independently from each other hydrogen or C₁-C₄-alkyl, preferably hydrogen, methyl, ethyl, n-propyl, isopropyl, n-butyl, isobutyl or tert.-butyl, more preferably hydrogen or methyl.
- Each R⁴: more preferably represents independently from each other CF₃, OCF₃, Br, Cl, pentafluoro-λ⁶-sulfanyl, cyclopropyl, 1-fluorocyclopropyl, 1-chlorocyclopropyl, 1-methylcyclopropyl, vinyl, allyl, ethynyl, prop-2-ynyl, SCH₃, SCH₂CH₃, SCH₂F, SCHF₂, SCF₃, formyl, 1,3-dioxolan-2-yl, or -C(R^{4a})=N-OR^{4b},
wherein R^{4a} represents hydrogen, methyl, ethyl, n-propyl, isopropyl, n-butyl, isobutyl or tert.-butyl, preferably hydrogen or methyl, R^{4b} represents hydrogen, methyl, ethyl, n-propyl, isopropyl, n-butyl, isobutyl or tert.-butyl, preferably hydrogen or methyl.
- Each R⁴: more preferably represents independently from each other CF₃, OCF₃, Br, Cl, pentafluoro-λ⁶-sulfanyl, cyclopropyl, ethynyl, SCH₃, SCF₃, formyl, 1,3-dioxolan-2-yl, or -C(R^{4a})=N-OR^{4b},
wherein R^{4a} represents hydrogen, and R^{4b} represents hydrogen.
- Each R⁴: more preferably represents independently from each other CF₃, OCF₃, Br, Cl, pentafluoro-λ⁶-sulfanyl, cyclopropyl, ethynyl, SCH₃, SCF₃, formyl, or -CH=N-OH.
- Each R⁴: more preferably represents independently from each other CF₃, OCF₃, Br, Cl or pentafluoro-λ⁶-sulfanyl.
- Each R⁴: most preferably represents independently from each other Br or Cl.

Preferably, R⁴ is located in the 2- and/or 4-position of the phenyl moiety of formula (I).

More preferably, R⁴ is located in the 4-position of the phenyl moiety of formula (I).
- m: preferably is 1, 2 or 3.
- m: more preferably is 1 or 2.
- m: most preferably is 1.
- R: preferably represents hydrogen, C₁-C₂-halogenalkyl or halogen.
- R: more preferably represents hydrogen, C₁-halogenalkyl, F or Cl.
- R: more preferably represents C₁-halogenalkyl, F or Cl.
- R: more preferably represents CF₃ or Cl.
- R: most preferably represents CF₃.
- Each R³: preferably represents independently from each other F, Cl, Br, CN, nitro, methyl, CF₃, methoxy or OCF₃.
- n: preferably is 0.

The radical definitions and explanations given above in general terms or stated within preferred ranges can be combined with one another as desired, i.e. including between the particular ranges and preferred ranges. They apply both to the end products and correspondingly to educts and intermediates. In addition, individual definitions may not apply.

Preference is given to those cases in which each of the radicals have the abovementioned preferred definitions.

Particular preference is given to those cases in which each of the radicals have the abovementioned more and/or most preferred definitions.

Hence, particular preferred a compound of formula (I) is used, wherein
- R¹: represents methyl,
- R⁴: represents Br or Cl;
- m: is 1; and
- Y: represents 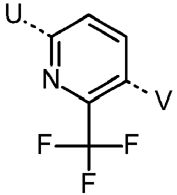
wherein Y is connected to the O via the bond identified with "U" and Y is connected to the CR¹ moiety via the bond identified with "V".

More preferred the compound of formula (I) is selected from the group consisting of 2-[6-(4-chlorophenoxy)-2-(trifluoromethyl)-3-pyridyl]-1-(1,2,4-triazol-1-yl)propan-2-ol (1.01) and 2-[6-(4-bromophenoxy)-2-(trifluoromethyl)-3-pyridyl]-1-(1,2,4-triazol-1-yl)propan-2-ol (1.02).

Compounds of formula (I), including compounds (1.01) and (1.02) comprise a stereogenic center at the carbon atom bearing the hydroxy group. They can be present in form of the optical isomers, their racemic or scalemic mixtures (the term "scalemic" denotes a mixture of enantiomers in different proportions), in all proportions. Compounds of formula (I) may be used in the method according to this invention in any of said forms.

Particularly preferred the compound of formula (I) is selected from the group consisting of (2R)-2-[6-(4-chlorophenoxy)-2-(trifluoromethyl)-3-pyridyl]-1-(1,2,4-triazol-1-yl)propan-2-ol, (2S)-2-[6-(4-chlorophenoxy)-2-(trifluoromethyl)-3-pyridyl]-l-(l,2,4-triazol-l-yl)propan-2-ol, the racemate of (2R)-2-[6-(4-chlorophenoxy)-2-(trifluoromethyl)-3-pyridyl]-1-(1,2,4-triazol-1-yl)propan-2-ol and (2S)-2-[6-(4-chlorophenoxy)-2-(trifluoromethyl)-3-pyridyl]-1-(1,2,4-triazol-1-yl)propan-2-ol, any scalemic mixture of (2R)-2-[6-(4-chlorophenoxy)-2-(trifluoromethyl)-3-pyridyl]-1-(1,2,4-triazol-1-yl)propan-2-ol and (2S)-2-[6-(4-chlorophenoxy)-2-(trifluoromethyl)-3-pyridyl]-1-(1,2,4-triazol-1-yl)propan-2-ol, (2R)-2-[6-(4-bromophenoxy)-2-(trifluoromethyl)-3-pyridyl]-1-(1,2,4-triazol-1-yl)propan-2-ol, (2S)-2-[6-(4-bromophenoxy)-2-(trifluoromethyl)-3-pyridyl]-1-(1 ,2,4-triazol-1-yl)propan-2-ol, the racemate of (2R)-2-[6-(4-bromophenoxy)-2-(trifluoromethyl)-3-pyridyl]-1-(1,2,4-triazol-1-yl)propan-2-ol and (2S)-2-[6-(4-bromophenoxy)-2-(trifluoromethyl)-3-pyridyl]-1-(1,2,4-triazol-1-yl)propan-2-ol, and any scalemic mixture of (2R)-2-[6-(4-bromophenoxy)-2-(trifluoromethyl)-3-pyridyl]-1-(1,2,4-triazol-1-yl)propan-2-ol and (2S)-2-[6-(4-bromophenoxy)-2-(trifluoromethyl)-3-pyridyl]-1-(1,2,4-triazol-1-yl)propan-2-ol.

In the definitions of the symbols given in the above and below formulae, collective terms were used which are generally representative of the following substituents:
The definition C₁-C₆-alkyl comprises the largest range defined here for an alkyl radical. Specifically, this definition comprises the meanings methyl, ethyl, n-, isopropyl, n-, iso-, sec-, tert-butyl, and also in each case all isomeric pentyls and hexyls, such as methyl, ethyl, propyl, 1-methylethyl, butyl, 1-methylpropyl, 2-methylpropyl, 1,1-dimethylethyl, n-pentyl, 1-methylbutyl, 2-methylbutyl, 3-methylbutyl, 1,2-dimethylpropyl, 1,1-dimethylpropyl, 2,2-dimethylpropyl, 1-ethylpropyl, n-hexyl, 1-methylpentyl, 2-methylpentyl, 3-methylpentyl, 4-methylpentyl, 1,2-dimethylbutyl, 1,3-dimethylbutyl, 2,3-dimethylbutyl, 1,1-dimethylbutyl, 2,2-dimethylbutyl, 3,3-dimethylbutyl, 1,1,2-trimethylpropyl, 1,2,2-trimethylpropyl, 1-ethylbutyl, 2-ethylbutyl, 1-ethyl-3-methylpropyl, in particular propyl, 1-methylethyl, butyl, 1-methylbutyl, 2-methylbutyl, 3-methylbutyl, 1,1-dimethylethyl, 1,2-dimethylbutyl, 1,3-dimethylbutyl, n-pentyl, 1-methylbutyl, 1-ethylpropyl, hexyl, 3-methylpentyl. A preferred range is C₁-C₄-alkyl, such as methyl, ethyl, n-, isopropyl, n-, iso-, sec-, tert-butyl. The definition C₁-C₂-alkyl comprises methyl and ethyl.

The definition halogen comprises fluorine, chlorine, bromine and iodine.

Halogen-substituted alkyl - e.g. referred to as halogenalkyl, halogenoalkyl or haloalkyl, e.g. C₁-C₄-halogenalkyl or C₁-C₂-halogenalkyl - represents, for example, C₁-C₄-alkyl or C₁-C₂-alkyl as defined above substituted by one or more halogen substituents which can be the same or different. Preferably C₁-C₄-halogenalkyl represents chloromethyl, dichloromethyl, trichloromethyl, fluoromethyl, difluoromethyl, trifluoromethyl, chlorofluoromethyl, dichlorofluoromethyl, chlorodifluoromethyl, 1-fluoroethyl, 2-fluoroethyl, 2,2-difluoroethyl, 2,2,2-trifluoroethyl, 2-chloro-2-fluoroethyl, 2-chloro-2,2-difluoroethyl, 2,2-dichloro-2-fluoroethyl, 2,2,2-trichloroethyl, 1,1-difluoroethyl, pentafluoroethyl, 1-fluoro-1-methylethyl, 2-fluoro-1,1-dimethylethyl, 2-fluoro-1-fluoromethyl-1-methylethyl, 2-fluoro-1,1-di(fluoromethyl)-ethyl, 1-chlorobutyl. Preferably C₁-C₂-halogenalkyl represents chloromethyl, dichloromethyl, trichloromethyl, fluoromethyl, difluoromethyl, trifluoromethyl, chlorofluoromethyl, dichlorofluoromethyl, chlorodifluoromethyl, 1-fluoroethyl, 2-fluoroethyl, 2,2-difluoroethyl, 2,2,2-trifluoroethyl, 2-chloro-2-fluoroethyl, 2-chloro-2,2-difluoroethyl, 2,2-dichloro-2-fluoroethyl, 2,2,2-trichloroethyl, 1,1-difluoroethyl, pentafluoroethyl.

Mono- or multiple fluorinated C₁-C₄-alkyl represents, for example, C₁-C₄-alkyl as defined above substituted by one or more fluorine substituent(s). Preferably mono- or multiple fluorinated C₁-C₄-alkyl represents fluoromethyl, difluoromethyl, trifluoromethyl, 1-fluoroethyl, 2-fluoroethyl, 2,2-difluoroethyl, 2,2,2-trifluoroethyl, pentafluoroethyl, 1-fluoro-1-methylethyl, 2-fluoro-1,1-dimethylethyl, 2-fluoro-1-fluoromethyl-1-methylethyl, 2-fluoro-1,1-di(fluoromethyl)-ethyl, 1-methyl-3-trifluoromethylbutyl, 3-methyl-1-trifluoromethylbutyl.

The definition C₂-C₆-alkenyl comprises the largest range defined here for an alkenyl radical. Specifically, this definition comprises the meanings ethenyl, n-, isopropenyl, n-, iso-, sec-, tert-butenyl, and also in each case all isomeric pentenyls, hexenyls, 1-methyl-1-propenyl, 1-ethyl-1-butenyl. Halogen-substituted alkenyl - referred to as C₂-C₆-haloalkenyl - represents, for example, C₂-C₆-alkenyl as defined above substituted by one or more halogen substituents which can be the same or different.

The definition C₂-C₆-alkynyl comprises the largest range defined here for an alkynyl radical. Specifically, this definition comprises the meanings ethynyl, n-, isopropynyl, n-, iso-, sec-, tert-butynyl, and also in each case all isomeric pentynyls, hexynyls. Halogen-substituted alkynyl - referred to as C₂-C₆-haloalkynyl - represents, for example, C₂-C₆-alkynyl as defined above substituted by one or more halogen substituents which can be the same or different.

The definition C₃-C₈-cycloalkyl comprises monocyclic saturated hydrocarbyl groups having 3 to 8 carbon ring members, such as cyclopropyl, cyclobutyl, cyclopentyl, cyclohexyl, cycloheptyl and cyclooctyl.

The definition aryl comprises aromatic, mono-, bi- or tricyclic ring, for example phenyl, naphthyl, anthracenyl (anthryl), phenanthracenyl (phenanthryl).

In the method according to the invention a plant or part thereof is treated with a compound of formula (I).

Generally, all plants and plant parts can be treated. By plants is meant all plants and plant populations such as desirable and undesirable wild plants, cultivars and plant varieties (whether or not protectable by plant variety or plant breeder's rights). Cultivars and plant varieties can be plants obtained by conventional propagation and breeding methods which can be assisted or supplemented by one or more biotechnological methods such as by use of double haploids, protoplast fusion, random and directed mutagenesis, molecular or genetic markers or by bioengineering and genetic engineering methods. By plant parts is meant all above ground parts and organs of plants such as shoot, leaf and blossom, whereby for example leaves, needles, stems, branches, blossoms, fruiting bodies, fruits and seed are listed.

Plants which can be treated in accordance with the invention include the following main crop plants: maize, soya bean, alfalfa, cotton, sunflower, *Brassica* oil seeds such as *Brassica napus* (e.g. canola, rapeseed), *Brassica rapa, B. juncea* (e.g. (field) mustard) and *Brassica carinata, Arecaceae sp.* (e.g. oilpalm, coconut), rice, wheat, sugar beet, sugar cane, oats, rye, barley, millet and sorghum, triticale, flax, nuts, grapes and vine and various fruit and vegetables from various botanic taxa, e.g. *Rosaceae sp.* (e.g. pome fruits such as apples and pears, but also stone fruits such as apricots, cherries, almonds, plums and peaches, and berry fruits such as strawberries, raspberries, red and black currant and gooseberry), *Ribesioidae sp., Juglandaceae sp., Betulaceae sp., Anacardiaceae sp., Fagaceae sp., Moraceae sp., Oleaceae sp.* (e.g. olive tree), *Actinidaceae sp., Lauraceae sp.* (e.g. avocado, cinnamon, camphor), *Musaceae sp.* (e.g. banana trees and plantations), *Rubiaceae sp.* (e.g. coffee), *Theaceae sp.* (e.g. tea), *Sterculiceae sp., Rutaceae sp.* (e.g. lemons, oranges, mandarins and grapefruit); *Solanaceae sp.* (e.g. tomatoes, potatoes, peppers, capsicum, aubergines, tobacco), *Liliaceae sp., Compositae sp.* (e.g. lettuce, artichokes and chicory - including root chicory, endive or common chicory), *Umbelliferae sp.* (e.g. carrots, parsley, celery and celeriac), *Cucurbitaceae sp.* (e.g. cucumbers - including gherkins, pumpkins, watermelons, calabashes and melons), *Alliaceae sp.* (e.g. leeks and onions), *Cruciferae sp.* (e.g. white cabbage, red cabbage, broccoli, cauliflower, Brussels sprouts, pak choi, kohlrabi, radishes, horseradish, cress and chinese cabbage), *Leguminosae sp.* (e.g. peanuts, peas, lentils and beans - e.g. common beans and broad beans), *Chenopodiaceae sp.* (e.g. Swiss chard, fodder beet, spinach, beetroot), *Linaceae sp.* (e.g. hemp), *Cannabeacea sp.* (e.g. cannabis), *Malvaceae sp.* (e.g. okra, cocoa), *Papaveraceae* (e.g. poppy), *Asparagaceae* (e.g. asparagus); useful plants and ornamental plants in the garden and woods including turf, lawn, grass and *Stevia rebaudiana*; and in each case genetically modified types of these plants.

Preferably, in the method according to the invention a plant species from the family of the true grasses *(Poaceae)* is treated.

More preferred the plant is selected from wheat, rye, barley, oats, millet/sorghum, maize, rice, triticale, bamboo, and sugarcane, more preferred from wheat, rye, barley, oats, millet/sorghum, maize, rice, triticale, and sugarcane, most preferred from wheat and barley.

In the method according to the invention the compound of formula (I) is applied via spray application. This allows very uniform application of the compound of formula (I) to the plants even in case of dense plant coverage.

In order to be applicable via spray application the compound of formula (I) needs to be provided in sprayable form. Preferably, the compound of formula (I) is provided as composition / formulation, comprising the compound of formula (I) and at least one suitable liquid carrier.

Suitable liquid carriers are preferably selected from water, organic solvents and combinations thereof.

Examples of suitable organic solvents include polar and nonpolar organic chemical liquids, for example from the classes of aromatic and nonaromatic hydrocarbons (such as cyclohexane, paraffins, alkylbenzenes, xylene, toluene alkylnaphthalenes, chlorinated aromatics or chlorinated aliphatic hydrocarbons such as chlorobenzenes, chloroethylenes or methylene chloride), alcohols and polyols , which may optionally also be substituted, etherified and/or esterified, (such as butanol or glycol), ketones (such as acetone, methyl ethyl ketone, methyl isobutyl ketone or cyclohexanone), esters (including fats and oils) and (poly)ethers, unsubstituted and substituted amines, amides (such as dimethylformamide), lactams (such as N-alkylpyrrolidones) and lactones, sulfones and sulfoxides (such as dimethyl sulfoxide).

The amount of liquid carrier typically ranges from 1 to 99.99%, preferably from 5 to 99.9%, more preferably from 10 to 99.5%, and most preferably from 20 to 99% by weight of the composition.

The composition may further comprise at least one surfactant.

The surfactant can be an ionic (cationic or anionic) or non-ionic surfactant, such as ionic or non-ionic emulsifier(s), foam former(s), dispersant(s), wetting agent(s) and any mixtures thereof. Examples of suitable surfactants include, but are not limited to, salts of polyacrylic acid, salts of lignosulfonic acid, salts of phenolsulfonic acid or naphthalenesulfonic acid, polycondensates of ethylene and/or propylene oxide with fatty alcohols, fatty acids or fatty amines (polyoxyethylene fatty acid esters, polyoxyethylene fatty alcohol ethers, for example alkylaryl polyglycol ethers), substituted phenols (preferably alkylphenols or arylphenols), salts of sulfosuccinic esters, taurine derivatives (preferably alkyl taurates), phosphoric esters of polyethoxylated alcohols or phenols, fatty esters of polyols and derivatives of compounds containing sulfates, sulfonates, phosphates (for example, alkylsulfonates, alkyl sulfates, arylsulfonates) and protein hydrolysates, lignosulfite waste liquors and methylcellulose. A surfactant is typically used when the compound of formula (I) is insoluble in water and the application is made with water. The amount of surfactants typically ranges from 5 to 40% by weight of the composition.

The composition may also comprise at least one further auxiliary.

Further examples of suitable auxiliaries include water repellents, siccatives, binders (adhesive, tackifier, fixing agent, such as carboxymethylcellulose, natural and synthetic polymers in the form of powders, granules or latices, such as gum arabic, polyvinyl alcohol and polyvinyl acetate, natural phospholipids such as cephalins and lecithins and synthetic phospholipids, polyvinylpyrrolidone and tylose), thickeners, stabilizers (e.g. cold stabilizers, preservatives, antioxidants, light stabilizers, or other agents which improve chemical and/or physical stability), dyes or pigments (such as inorganic pigments, e.g. iron oxide, titanium oxide and Prussian Blue ; organic dyes, e.g. alizarin, azo and metal phthalocyanine dyes), antifoams (e.g. silicone antifoams and magnesium stearate), preservatives (e.g. dichlorophene and benzyl alcohol hemiformal), secondary thickeners (cellulose derivatives, acrylic acid derivatives, xanthan, modified clays and finely divided silica), stickers, gibberellins and processing auxiliaries, mineral and vegetable oils, perfumes, waxes, nutrients (including trace nutrients, such as salts of iron, manganese, boron, copper, cobalt, molybdenum and zinc), protective colloids, thixotropic substances, penetrants, sequestering agents and complex formers.

The composition may be in any customary sprayable form, such as solutions (e.g aqueous solutions), emulsions, water- and oil-based suspensions, suspoemulsions and the respective concentrates. The compound of formula (I) may be present in a suspended, emulsified or dissolved form.

The composition may be provided to the end user as ready-for-use formulation, i.e. the compositions may be directly applied to the plants or plant parts by a suitable spraying device. Alternatively, the compositions may be provided to the end user in the form of concentrates which have to be diluted, preferably with water, prior to use.

The composition useful in the method according to the invention contains generally from 0.01 to 99% by weight, from 0.05 to 98% by weight, preferably from 0.1 to 95% by weight, more preferably from 0.5 to 90% by weight, most preferably from 1 to 80% by weight of the compound of formula (I). It is possible that a composition comprises two or more compounds of formula (I). In such case the outlined ranges refer to the total amount of compounds of formula (I).

Preferably, the compound of formula (I) is applied as an emulsion concentrate, more preferred an emulsion concentrate comprising the compound of formula (I) in an amount of 50 to 500 g/L.

The application rates of the compound of formula (I) can vary within a relatively wide range, for example from 0.1 to 10 000 g/ha, preferably from 10 to 1000 g/ha, more preferably from 50 to 300 g/ha.

In the method according to the invention, the compound of formula (I) is preferably applied to the plant or a part thereof 1 to 10 times, more preferably 1 to 8 times, most preferably 1 to 5 times, preferably in the growth stages BBCH 10 to 89.

Preferably, the compound of formula (I) is applied in the growth stages BBCH 30 to 70. More preferred, at least one application is done during growth stages 30 to 40.

The term "growth stage" refers to the growth stages as defined by the BBCH Codes in "Growth stages of mono- and dicotyledonous plants", 2nd edition 2001, edited by Uwe Meier from the Federal Biological Research Centre for Agriculture and Forestry. The BBCH codes are a well-established system for a uniform coding of phonologically similar growth stages of all mono- and dicotyledonous plant species. The abbreviation BBCH derives from "Biologische Bundesanstalt, Bundessortenamt und Chemische Industrie".

The invention is illustrated by the examples below. However, the invention is not limited to the examples.

### Examples

### Example 1: Impact of different compounds of formula (I) on Yield, Greening and Canopy Coverage

A field trial in winter wheat was conducted in the experimental station "Laacherhof" in Germany from autumn 2016 to summer 2017.

Seeds of the winter wheat variety "Dekan" were planted in October 2016. Fertilization, herbicide- and plant growth regulator applications were carried out according to the local agricultural practice. Additionally, a cover spray with the fungicidal composition "Pronto® Plus" was carried out at BBCH growth stage 51 in order to keep the field trial pathogen-free. The trial was conducted with 4 replicates and the replicates 2, 3 and 4 were randomized. The plot size was 8.8 m².

The compounds 2-[6-(4-chlorophenoxy)-2-(trifluoromethyl)-3-pyridyl]-1-(1,2,4-triazol-1-yl)propan-2-ol (I.01) and 2-[6-(4-bromophenoxy)-2-(trifluoromethyl)-3-pyridyl]-1-(1,2,4-triazol-1-yl)propan-2-ol (1.02) were sprayed threefold at BBCH growth stages 31, 39 and 69 with an use rate of 125 g a.i./ha (a.i. = active ingredient, i.e. the respective compound of formula (I)). Both compounds were applied as a 100EC formulation (100EC = emulsion concentrate comprising 100 g/L of the respective active ingredient).

The winter wheat was harvested in July 2017. The impact of the compounds on yield, greening and canopy coverage is shown in table 1.

The greening effect was measured visually at BBCH growth stage 65. The greening of the untreated control plots corresponds to 100% and the plots of the other treatments were directly compared to the control plots (table 1).

The canopy coverage was measured by a tractor-mounted RGB camera system on May 11, 2017 at BBCH growth stage 37 (table 1).

**Table 1: Impact of different compounds on yield, greening and canopy coverage**

| Treatment | Use Rate (g a.i./ha) | Grain Yield (dt/ha) | Grain Yield (% of Control) | Greening (% of Control) | Canopy Coverage (%) |
|---|---|---|---|---|---|
| Control * | - | 69,2 | 100 | 100 | 47 |
| 1.02 | 125 | 77,8 | 112 | 137 | 58 |
| 1.01 | 125 | 74,6 | 108 | 108 | 58 |

| | | | | | |
|---|---|---|---|---|---|
| * Application of a 100EC blank formulation | | | | | |

Based on these results it can be concluded that the compounds increase the grain yield in winter wheat under pathogen-free conditions. Additionally, a clear greening effect and an obvious increase in canopy coverage were observed after application of these compounds, which shows the yield increasing potential of the tested compounds.

### Example 2: Greening Effect of 2-[6-(4-bromophenoxy)-2-(trifluoromethyl)-3-pyridyl]-1-(1,2,4-triazol-1-yl)propan-2-ol (I.02) (Leaf Disc Test)

In a lab experiment, leaf discs of grape plants were put in petri dishes containing solutions of different compounds. 5 replicates were used for each treatment. Afterwards, the petri dishes were incubated for max. 7 days at room temperature (21°C). After 3 days, the chlorophyll content of the leaf discs was measured by using a commercially available hand-held chlorophyll meter (SPAD-502, Konica Minolta). The results are shown in table 2.

**Table 2: Impact of 2-[6-(4-bromophenoxy)-2-(trifluoromethyl)-3-pyridyl]-1-(1,2,4-triazol-1-yl)propan-2-ol (I.02) on the chlorophyll content (greening effect) in leaf discs**

| Treatment | Use Rate (ppm) | SPAD Reading |
|---|---|---|
| Untreated Control | - | 24 |
| 1.02 | 1 | 32 |
| Tebuconazole | 1 | 25 |

These results show that application of 2-[6-(4-bromophenoxy)-2-(trifluoromethyl)-3-pyridyl]-1-(1,2,4-triazol-1-yl)propan-2-ol (1.02) results in an increased chlorophyll content of the leaf discs indicating that a clear greening effect can be expected also under field conditions. The effect was much stronger than the effect of tebuconazole. This observation supports the yield increasing potential of the tested compound of formula (I) also under lab conditions.

### Example 3: Fungicidal Efficacy of 2-[6-(4-chlorophenoxy)-2-(trifluoromethyl)-3-pyridyl]-1-(1,2,4-triazol-1-yl)propan-2-ol (I.01) and 2-[6-(4-bromophenoxy)-2-(trifluoromethyl)-3-pyridyl]-1-(1,2,4-triazol-1-yl)propan-2-ol (I.02) against different Septoria tritici Strains

In an in-vitro microtest, several compounds were tested against different strains of *Septoria tritici.* In previous field experiments, these strains proved to be difficult to control strains.

The microtest was performed in liquid medium with 50% malt medium using microtitre plates.

The active compounds are applied as technical active substances dissolved in methanol and 8 concentrations were prepared. The resulting concentration range was 0; 0.0032; 0.016; 0.08; 0.4; 2; 10; and 50 µg a.i. /ml. A mycelium suspension of different strains of *Septoria tritici* was used for inoculation. After 5 days of incubation in darkness under shaking (10 Hrz) the optical density in each cavity was determined photometrically at 620 nm. EC50 values were calculated according to the extinction values (the EC50 (Effect Concentration 50) is a central characteristic of the isolate - it shows the concentration of a.i. in ppm at which the pathogen growth coverage is reduced by 50%). The results are shown in table 3.

**Table 3: Septoria tritici test /in vitro**

| Strain (Code) | Tebuconazole (EC50) | 1.02 (EC50) | 1.01 (EC50) |
|---|---|---|---|
| 01/16 | 8,1102 | 0,0187 | 0,1348 |
| 02/16 | 14,4303 | 0,0108 | 0,0248 |
| 03/16 | 13,2784 | 0,0043 | 0,0032 |
| 04/16 | 50,0000 | 0,0433 | 0,0355 |
| 05/16 | 8,5712 | 0,0223 | 0,0503 |
| 06/16 | 10,6222 | 0,0033 | 0,0039 |
| 07/16 | 5,4355 | 0,0032 | 0,0032 |
| 08/16 | 4,2639 | 0,0629 | 0,0641 |
| 09/16 | 27,1082 | 0,0416 | 0,1002 |
| 11/16 | 0,6823 | 0,0038 | 0,0034 |
| 12/16 | 2,1260 | 0,0806 | 0,0715 |
| 13/16 | 28,6583 | 0,0169 | 0,0055 |
| 14/16 | 3,4790 | 0,0080 | 0,0147 |
| 15/16 | 2,3577 | 0,0059 | 0,0663 |
| Mean | 7,4138 | 0,0133 | 0,0203 |

These results show that 2-[6-(4-chlorophenoxy)-2-(trifluoromethyl)-3-pyridyl]-1-(1,2,4-triazol-1-yl)propan-2-ol (1.01) and 2-[6-(4-bromophenoxy)-2-(trifluoromethyl)-3-pyridyl]-1-(1,2,4-triazol-1-yl)propan-2-ol (1.02) controlled the vast majority of the difficult to control *Septoria tritici* strains at a lower concentration than the commercially available fungicide tebuconazole indicating a higher fungicidal efficacy.

## Claims

1. Method of increasing plant yield and/or increasing the chlorophyll content of a plant, comprising spray application of a compound of formula (I) 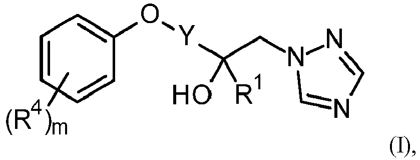 wherein
R¹ represents hydrogen, C₁-C₆-alkyl, C₂-C₆-alkenyl, C₂-C₆-alkynyl, C₃-C₈-cycloalkyl, C₃-C₈-cycloalkyl-C₁-C₄-alkyl or C₆-C₁₄-aryl,
wherein the aliphatic moieties, excluding cycloalkyl moieties, of R¹ may carry 1, 2, 3 or up to the maximum possible number of identical or different groups R^{a} which independently of one another are selected from halogen, CN, nitro, phenyl, C₁-C₄-alkoxy and C₁-C₄-halogenalkoxy, wherein the phenyl may be substituted by 1, 2, 3, 4 or 5 substituents selected independently from each other from halogen, CN, nitro, C₁-C₄-alkyl, C₁-C₄-alkoxy, C₁-C₄-halogenalkyl, C₁-C₄-halogenalkoxy,
and wherein the cycloalkyl and/or C₆-C₁₄-aryl moieties of R¹ may carry 1, 2, 3, 4, 5 or up to the maximum number of identical or different groups R^{b} which independently of one another are selected from halogen, CN, nitro, C₁-C₄-alkyl, C₁-C₄-alkoxy, C₁-C₄-halogenalkyl and C₁-C₄-halogenalkoxy;
each R⁴ represents independently of one another halogen, CN, nitro, C₁-C₄-alkyl, C₁-C₄-halogenalkyl, C₁-C₄-alkoxy, C₁-C₄-halogenalkoxy, C₁-C₄-alkylcarbonyl, hydroxy-substituted C₁-C₄-alkyl, pentafluoro-λ⁶-sulfanyl, C₃-C₆-cycloalkyl, C₃-C₆-halogencycloalkyl, C₁-C₄-alkyl-C₃-C₆-cycloalkyl, C₂-C₆-alkenyl, C₂-C₆-halogenalkenyl, C₂-C₆-alkynyl, C₂-C₆-halogenalkynyl, C₁-C₄-alkylsulfanyl, C₁-C₄-halogenalkylsulfanyl, C₁-C₆-alkylsulfonyl, C₆-C₁₀-arylsulfonyl, C₁-C₆-alkyl-SO₂NH-, C₆-C₁₀-aryl-SO₂NH-, formyl, 5-, 6- or 7-membered saturated heterocycloalkyl containing up to 4 heteroatoms selected from N, O and S, or -C(R^{4a})=N-OR^{4b}, wherein R^{4a} and R^{4b} represent independently from each other hydrogen, C₁-C₆-alkyl or phenyl;
m is an integer and is 0, 1, 2, 3, 4 or 5;
Y represents 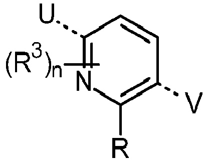
wherein Y is connected to the O via the bonds identified with "U" and Y is connected to the CR¹ moiety via the bonds identified with "V" and
wherein
R represents hydrogen, C₁-C₂-halogenalkyl, C₁-C₂-halogenalkoxy, C₁-C₂-alkylcarbonyl or halogen;
each R³ represents independently from each other halogen, CN, nitro, C₁-C₄-alkyl, C₁-C₄-halogenalkyl, C₁-C₄-alkoxy or C₁-C₄-halogenalkoxy; and
n is an integer and is 0 or 1;
to the plant or a part thereof.

2. Method according to claim 1, wherein
R¹ represents hydrogen, methyl, ethyl, propyl, isopropyl, butyl, cyclopropyl, CF₃, benzyl, allyl, CH₂C≡C-CH₃ or CH₂C≡CH,
each R⁴ represents independently from each other CF₃, OCF₃, Br, Cl, pentafluoro-λ⁶-sulfanyl, cyclopropyl, 1-fluorocyclopropyl, 1-chlorocyclopropyl, 1-methylcyclopropyl, vinyl, allyl, ethynyl, prop-2-ynyl, SCH₃, SCH₂CH₃, SCH₂F, SCHF₂, SCF₃, methylsulfonyl, phenylsulfonyl, methyl-SO₂NH-, phenyl-SO₂NH-, formyl, dioxolanyl, dioxanyl, or -C(R^{4a})=N-OR^{4b},
wherein R^{4a} and R^{4b} represent independently from each other hydrogen or C₁-C₄-alkyl, preferably hydrogen, methyl, ethyl, n-propyl, isopropyl, n-butyl, isobutyl or tert.-butyl, more preferably hydrogen or methyl,
and/or
m is 1.

3. Method according to at least one of claims 1 to 2, wherein
R represents CF₃ or Cl,
and/or
n is 0.

4. Method according to at least one of claims 1 to 3, wherein
R¹ represents methyl,
R⁴ represents Br or Cl;
m is 1; and
Y represents 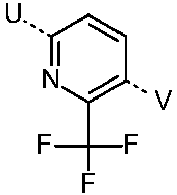
wherein Y is connected to the O via the bond identified with "U" and Y is connected to the CR¹ moiety via the bond identified with "V".

5. Method according to at least one of claims 1 to 4, wherein the compound of formula (I) is selected from the group consisting of 2-[6-(4-chlorophenoxy)-2-(trifluoromethyl)-3-pyridyl]-1-(1,2,4-triazol-1-yl)propan-2-ol and 2- [6-(4-bromophenoxy)-2-(trifluoromethyl)-3-pyridyl]-1-(1,2,4-triazol-1-yl)propan-2-ol.

6. Method according to at least one of claims 1 to 5, wherein the compound of formula (I) is selected from the group consisting of (2R)-2-[6-(4-chlorophenoxy)-2-(trifluoromethyl)-3-pyridyl]-1-(1,2,4-triazol-1-yl)propan-2-ol, (2S)-2-[6-(4-chlorophenoxy)-2-(trifluoromethyl)-3-pyridyl]-1-(1,2,4-triazol-1-yl)propan-2-ol, the racemate of (2R)-2-[6-(4-chlorophenoxy)-2-(trifluoromethyl)-3-pyridyl]-1-(1,2,4-triazol-1-yl)propan-2-ol and (2S)-2-[6-(4-chlorophenoxy)-2-(trifluoromethyl)-3-pyridyl]-1-(1,2,4-triazol-1-yl)propan-2-ol, any mixture of (2R)-2-[6-(4-chlorophenoxy)-2-(trifluoromethyl)-3-pyridyl]-1-(1,2,4-triazol-1-yl)propan-2-ol and (2S)-2-[6-(4-chlorophenoxy)-2-(trifluoromethyl)-3-pyridyl]-1-(1,2,4-triazol-1-yl)propan-2-ol, (2R)-2-[6-(4-bromophenoxy)-2-(trifluoromethyl)-3-pyridyl]-1-(1,2,4-triazol-1-yl)propan-2-ol, (2S)-2-[6-(4-bromophenoxy)-2-(trifluoromethyl)-3-pyridyl]-1-(1,2,4-triazol-1-yl)propan-2-ol, the racemate of (2R)-2-[6-(4-bromophenoxy)-2-(trifluoromethyl)-3-pyridyl]-1-(1,2,4-triazol-1-yl)propan-2-ol and (2S)-2-[6-(4-bromophenoxy)-2-(trifluoromethyl)-3-pyridyl]-1-(1,2,4-triazol-1-yl)propan-2-ol, and any mixture of (2R)-2-[6-(4-bromophenoxy)-2-(trifluoromethyl)-3-pyridyl]-1-(1,2,4-triazol-1-yl)propan-2-oland (2S)-2-[6-(4-bromophenoxy)-2-(trifluoromethyl)-3-pyridyl]-1-(1,2,4-triazol-1-yl)propan-2-ol.

7. Method according to at least one of claims 1 to 6, wherein the plant is a plant species from the family of the true grasses *(Poaceae).*

8. Method according to at least one of claims 1 to 7, wherein the plant is selected from wheat, rye, barley, oats, millet/sorghum, maize, rice, triticale, bamboo, and sugarcane.

9. Method according to at least one of claims 1 to 8, wherein the compound of formula (I) is applied to the plant or a part thereof 1 to 10 times.

10. Method according to at least one of claims 1 to 9, wherein the compound of formula (I) is applied to the plant or a part thereof in the growth stages BBCH 30 to 70.
